# EUROPÄISCHE PATENTSCHRIFT

(11) **EP 4 003 096 B1**
(45) Veröffentlichungstag und Bekanntmachung des Hinweises auf die Patenterteilung: **26.11.2025**
(21) Anmeldenummer: 20712011.4
(22) Anmeldetag: 14.02.2020
(51) Int. Cl.: A47B 96/06, F16B 12/02

(54) **MÖBEL MIT MINDESTENS EINEM HALTECLIP ZUM BEFESTIGEN EINES WANDELEMENTS AN EINER MÖBELSTRUKTUR**
ITEM OF FURNITURE HAVING AT LEAST ONE RETAINING CLIP FOR SECURING A WALL ELEMENT TO A FURNITURE STRUCTURE
MEUBLE COMPRENANT AU MOINS UNE PINCE DE FIXATION POUR FIXER UN ÉLÉMENT DE PAROI À UNE STRUCTURE DE MEUBLE

(43) Veröffentlichungstag der Anmeldung: 01.06.2022
(73) Patentinhaber: Steelcase Inc., Grand Rapids, MI 49501 (US)
(72) Erfinder: FRIES, Florian, 80992 München (DE)
(74) Vertreter: Flach Bauer & Partner Patentanwälte mbB
(86) Internationale Anmeldenummer: PCT/IB2020/000037
(87) Internationale Veröffentlichungsnummer: WO 2021/161055

(56) Entgegenhaltungen:
- DE-A1- 2 163 583
- JP-A- 2014 077 484
- JP-A- 2015 194 170
- JP-U- H0 550 123
- TR-A2- 201 808 913

## Beschreibung

Die Erfindung betrifft ein Möbel mit mindestens einem Halteclip, wobei der Halteclip zum Befestigen eines Wandelements des Möbels an einer Möbelstruktur dient.

Möbel in der Form von Regalen oder Schränken oder andere kastenförmige Möbelstücke weisen häufig eine Rahmenstruktur auf, an der ein oder mehrere Wandelemente, beispielsweise Seitenwände oder eine Rückwand, befestigt werden sollen.

Die Befestigung derartiger Wandelemente an der Rahmenstruktur erfolgt üblicherweise mittels Schrauben. Dies ist jedoch relativ zeitaufwändig und umständlich und insbesondere nicht ohne Werkzeug möglich.

Darüber hinaus ist es bekannt, für die Rahmenstruktur von Möbeln rohrförmige Struktur- bzw. Rahmenelemente zu verwenden, die einen kreisrunden Querschnitt haben. Die Wandelemente bestehen dort aus Metall und haben in ihren Randbereichen rinnenartige Ausformungen, zum Verrasten mit den Rahmenrohren. Nachteilig ist hierbei, dass die gesamten Randbereiche der Wandelemente speziell geformt und in ihrer Form an die Rahmenrohre angepasst sein müssen. Darüber hinaus ist dieses Befestigungssystem nur bei Wandelementen anwendbar, die aus ganz bestimmten Materialien, insbesondere aus Stahlblech, bestehen.

Weiterhin betrifft JP 2015 194 170 A eine Metallklammer für ein Wandpaneel, die bei der Montage eine ausreichende Federkraft aufbringen kann um das Wandpaneel an einer Stützsäule anzubringen. JP H05 50123 U schlägt einen Clip für das Befestigen einer Schreibtischplatte auf einem Untergestell vor.

DE 21 63 583 A1 betrifft ein Verbindungselement zum Herstellen einer Strukturverbindung zwischen zwei Tafeln oder Platten verformbaren Materials. Zudem ist aus JP 2014 077 484 A eine Vorrichtung zum Befestigen von Plattenelementen bekannt, die in der Lage ist, ein Plattenelement zu stützen und zu befestigen, indem das Plattenelement an einem stabförmigen Element, wie z.B. einem Rohr, befestigt wird.

TR 2018 089 13 A2 betrifft ein Befestigungsmittel, welches es ermöglicht Möbel faltbar zu gestalten.

Der Erfindung liegt daher die Aufgabe zugrunde, Möbel mit einem Halteclip zum Befestigen eines Wandelements an einer Möbelstruktur zu schaffen, mit dem die Befestigung von Wandelementen an einer Möbelstruktur auf besonders einfache und schnelle Weise sowie werkzeuglos möglich ist.

Diese Aufgabe wird erfindungsgemäß durch ein Möbel mit den Merkmalen des Anspruchs 1 gelöst. Vorteilhafte Ausführungsformen der Erfindung sind in den weiteren Ansprüchen beschrieben.

Das erfindungsgemäße Möbel umfasst einen Halteclip, zum Befestigen eines Wandelements des Möbels an einer Möbelstruktur wobei der Halteclip umfasst:
- einen Befestigungsabschnitt zum Befestigen des Halteclips am Wandelement, wobei der Befestigungsabschnitt einen ersten Randabschnitt und einen zweiten Randabschnitt aufweist;
- einen Anschlagabschnitt, der sich vom ersten Randabschnitt des Befestigungsabschnitts in einer ersten Richtung weg erstreckt und ausgebildet ist, an einem ersten Strukturelement der Möbelstruktur anzuschlagen; und
- einen elastischen Clipabschnitt, der sich vom zweiten Randabschnitt des Befestigungsabschnitts in einer zweiten Richtung, die zur ersten Richtung unterschiedlich ist, weg erstreckt und zwischen einer das Einsetzen des Wandelements in die Möbelstruktur ermöglichenden Einsetzposition und einer ein zweites Strukturelement der Möbelstruktur hintergreifenden Rückhalteposition elastisch bewegbar ist.

Unter "Möbelstruktur" wird im Rahmen der Erfindung derjenige Aufbau eines Möbels verstanden, der vor Anbringung des Wandelements vorhanden ist. Eine derartige Möbelstruktur umfasst insbesondere eine Rahmenstruktur, wobei das erste Strukturelement ein Rahmenteil ist, und ein zweites Strukturelement in der Form eines Bretts, beispielsweise Regalbretts (Bodenbrett / Fachbrett / Deckenbrett) oder einer Querstrebe der Rahmenstruktur. Unter "Möbel" wird im Rahmen der vorliegenden Erfindung die Gesamtheit aus Möbelstruktur und Wandelement verstanden.

Mittels des Halteclips kann das Wandelement auf einfache und schnelle Weise sowie werkzeuglos von einer Seite her, insbesondere von der Innenseite des Möbels her, in die Möbelstruktur eingesetzt und eingeclipst werden, wobei sich das Wandlelement vorteilhafterweise in der Möbelstruktur selbst zentriert. Der Halteclip kann aus unterschiedlichen Materialien hergestellt werden und besteht bevorzugt aus einer Kunststoff oder Metall. Der Halteclip kann zur Befestigung unterschiedlichster Wandelemente verwendet werden, beispielsweise von Wandelementen aus Holz, Kunststoff oder Metall. Da die Halteclips erst nach Herstellung des Wandelements an diesem befestigt werden, können auch die Wandelemente auf einfache und kostengünstige Weise hergestellt werden. Vorteilhafterweise sind außer den Halteclips keine weiteren Befestigungsmittel erforderlich, um das Wandelement an der Möbelstruktur zu befestigen und zu zentrieren.

Vorzugsweise ist der Befestigungsabschnitt des Halteclips plattenförmig ausgebildet, wobei dessen erster und zweiter Randabschnitt zueinander in einem Winkel von 90° verlaufen, und wobei der Anschlagabschnitt und der Clipabschnitt über die Randabschnitte hinaus in Richtungen überstehen, die zueinander orthogonal sind. Ein derartiger Halteclip eignet sich insbesondere für rechteckige Wandelemente. Soll der Halteclip bei Wandelementen verwendet werden, die keine rechtwinkligen Ecken haben, können der Anschlagabschnitt und der Clipabschnitt zueinander auch andere, entsprechend angepasste Winkel einnehmen. Die plattenförmige Ausbildung des Befestigungsabschnitts stellt eine relativ großflächige Anlage des Halteclips am Wandelement sicher, so dass ein Ausbrechen der Wandelemente im Befestigungsbereich auch bei größeren Belastungen zuverlässig vermieden wird.

Bevorzugt hat der Befestigungsabschnitt die Form eines Dreiecks, insbesondere eines rechtwinkligen Dreiecks. Eine derartige Form bietet fertigungstechnische Vorteile. Weiterhin können auf diese Weise die Halteclips auf einfache und optisch ansprechende Weise im Bereich der Ecken des Wandelements befestigt werden.

Die Halteclips werden in einen Befestigungsschlitz eingesetzt, der von den Stirnflächen des Wandelements her im Bereich seiner Ecken eingebracht, beispielsweise eingesägt oder eingefräst wird. Die Hypotenuse des dreieckigen Befestigungsabschnitts ist vorzugsweise geradlinig, kann jedoch auch gebogen oder anders geformt sein. Weiterhin ist es möglich, die Form des Befestigungsabschnitts anders zu gestalten, insbesondere rechteckig.

Vorzugsweise weist der Befestigungsabschnitt an zumindest einer seiner Seitenflächen vorstehende Verankerungsnoppen auf, die zum Verankern des Halteclips im Wandelement ausgebildet sind. Derartige Verankerungsnoppen ermöglichen auf einfache Weise die Fixierung des Halteclips in einem Befestigungsschlitz des Wandelements ohne zusätzliche Befestigungsmittel. Es ist aber in Abhängigkeit des Materials des Wandelements auch möglich, alternativ oder zusätzlich den Halteclip mittels eines Klebers, insbesondere Heißklebers, im Befestigungsschlitz des Wandelements zu befestigen.

Falls der Halteclip und das Wandelement aus einem verschweißbaren Material, insbesondere Kunststoffmaterial, bestehen, ist es auch möglich, den Halteclip mit dem Wandelement zu verschweißen, insbesondere mittels eines Ultraschall-Schweißverfahrens.

Gemäß einer vorteilhafter Ausführungsform weist der Befestigungsabschnitt eine Hauptebene auf, wobei der Anschlagabschnitt eine zum Anschlagen an das erste Strukturelement der Möbelstruktur ausgebildete Anschlagfläche aufweist, die in einem Winkel von 45° zur Hauptebene des Befestigungsabschnitts angeordnet ist. Die Anschlagfläche des Anschlagabschnitts ist auf diese Weise derart angeordnet, dass sie vollflächig an einem ersten Strukturelement, insbesondere an einem vertikalen Stützelement bzw. Standrohr der Möbelstruktur, anschlagen kann, das relativ zu einem Korpus des Möbels um 45° verdreht angeordnet ist. Die Anschlagfläche des Anschlagabschnitts kann jedoch auch anders ausgerichtet und/oder ausgebildet, z.B. rund, sein. Zweckmäßigerweise ist die Anschlagfläche so ausgebildet und angeordnet, dass bei auf gegenüberliegenden Seiten des Wandelements befestigten Halteclips eine Selbstzentrierung des Wandelements in der Möbelstruktur in einer bestimmten Richtung, z.B. in horizontaler Richtung, erfolgt oder zumindest unterstützt wird.

Vorzugsweise sind der Anschlagabschnitt und Clipabschnitt von einer von den Randabschnitten gebildeten Ecke des Befestigungsabschnitts 2 bis 50 mm, vorzugsweise 4 bis 30 mm, besonders vorzugsweise 6 bis 20 mm, beabstandet. Durch diesen Abstand werden die über den Anschlagabschnitt und Clipabschnitt auf das Wandelement übertragenen Kräfte in einem entsprechenden Abstand von der Ecke des Wandelements in das Wandelement eingeleitet, so dass die Gefahr des Ausbrechens der Ecke des Wandelements bei größeren Belastungen zuverlässig verhindert wird. Position und Größe des Anschlagabschnitts und Clipabschnitts werden zweckmäßigerweise auf den jeweiligen Anwendungsfall abgestimmt.

Vorzugsweise ist der Clipabschnitt im Querschnitt L-förmig und weist einen Verbindungsschenkel, der an dem Befestigungsabschnitt angeformt ist und sich quer von diesem weg erstreckt, und einen Rückhalteschenkel auf, der an den Verbindungsschenkel angeformt und zur Anlage am zweiten Strukturelement der Regalstruktur ausgebildet ist.

Besonders bevorzugt ist hierbei, wenn sich der Verbindungsschenkel in einem Winkel größer 90° bis 160°, bevorzugt 90° bis 120°, besonders bevorzugt 108° bis 112°, zum Befestigungsabschnitt erstreckt. Hierdurch entfernt sich der Verbindungsschenkel des in den Befestigungsschlitz des Wandelements eingesetzten Halteclips in Richtung seines freien Endes zunehmend von der Stirnfläche des Wandelements, wodurch ein Freiraum geschaffen wird, der zum Einfedern des Halteclips benutzt wird, wenn das Wandelement zusammen mit dem Halteclip in die Möbelstruktur eingesetzt wird. Ferner wird durch den schräg angeordneten Verbindungsschenkel eine Vorspannkraft zwischen dem Wandelement und der Möbelstruktur in einer Richtung, beispielsweise in vertikaler Richtung, aufgebracht und die Selbstzentrierung des Wandelements in der Möbelstruktur in dieser Richtung gewährleistet.

Der Anschlagsabschnitt und der Clipabschnitt bilden Einsteckanschläge zur Begrenzung des Einsteckwegs des Befestigungsabschnitts in das Wandelement. Dies stellt auf einfache Weise die korrekte Positionierung des Halteclips in einem Befestigungsschlitz des Wandelements sicher.

Erfindungsgemäß ist das Wandelement plattenförmig ausgebildet und umfasst:
- Seitenflächen,
- erste und zweite Stirnflächen, die eine Ecke bilden, und
- einen Befestigungsschlitz zum Einsetzen des Befestigungsabschnitts des Halteclips, wobei sich der Befestigungsschlitz von der Ecke des Wandelements zwischen den Seitenflächen in das Wandelement hinein erstreckt.

Mit Hilfe eines derartigen Befestigungsschlitzes kann der Halteclip auf einfache, schnelle und sichere Weise am Wandelement befestigt werden. Der Befestigungsabschnitt ist hierbei vorzugsweise vollständig innerhalb des Wandelements aufgenommen und nach der Montage des Wandelements am Möbel weder von der Innenseite noch von der Außenseite des Möbels her sichtbar.

Bevorzugt verlaufen die ersten und zweiten Randabschnitte des Befestigungsabschnitts des in den Befestigungsschlitz eingesetzten Halteclips parallel zur ersten und zweiten Stirnfläche des Wandelements.

Weiterhin ist es vorteilhaft, wenn der Anschlagabschnitt des eingesetzten Halteclips im Zwischenraum von zwei Ebenen liegt, in denen die Seitenflächen des Wandelements liegen. Der Anschlagabschnitt steht in diesem Fall nicht über die Seitenflächen des Wandelements vor, was insbesondere optisch vorteilhaft ist.

Bevorzugt ist das erste Strukturelement, mit dem der Anschlagabschnitt des Halteclips zusammenwirkt, ein vertikales Stützelement des Möbels, während das zweite Strukturelement, mit dem der Clipabschnitt des Halteclips zusammenwirkt, ein Brett eine horizontale Strebe des Möbels ist. Die Bezeichnung "Brett" ist im Rahmen der vorliegenden Erfindung in allgemeinster Form zu verstehen und kann beliebige plattenartige Elemente unabhängig von dessen Material umfassen.

Besonders bevorzugt ist das erste Strukturelement ein vertikales Stützelement eines Regals und das zweite Strukturelement ein Regalbrett oder eine horizontale Querstrebe eines Regals.

Vorzugsweise weist das Möbel mindestens zwei vertikale Stützelemente mit rechteckigem Querschnitt und mindestens ein von den Stützelementen getragenes Brett mit rechteckiger Kontur auf, wobei der rechteckige Querschnitt der Stützelemente relativ zur rechteckigen Kontur des Bretts um 45° gedreht angeordnet ist. Hierdurch kann das Wandelement auf besonders einfache Weise über den Anschlagsabschnitt auf eine in der Draufsicht schräge Wand des vertikalen Stützelements angeschlagen und mittels des Clipabschnitts derart an einer Stirnfläche eines Regalbretts oder einer horizontalen Querstrebe des Regals verrastet werden, dass das Wandelement sowohl in als auch entgegen der Einsetzrichtung zuverlässig fixiert ist. Stützelemente mit anderem Querschnitt, beispielsweise rundem oder anderem mehreckigen Querschnitt, oder anderer Querschnittsausrichtung sind ohne weiteres möglich.

Die Erfindung wird nachfolgend anhand der Zeichnungen beispielhaft näher erläutert. Es zeigen:
- Figur 1:: einen Vertikalschnitt durch ein erfindungsgemäßes Möbel in der Form eines Regals, wobei ein Wandelement beim Einsetzen in die Möbelstruktur gezeigt ist;
- Figuren 2 bis 4:: verschiedene Ansichten einer ersten Ausführungsform des Halteclips;
- Figuren 5 bis 7:: verschiedene Ansichten einer zweiten Ausführungsform des Halteclips, die spiegelbildlich zur ersten Ausführungsform ausgebildet ist;
- Figur 8:: eine räumliche Darstellung eines Wandelements mit eingesetzten Halteclips;
- Figur 9:: eine vergrößerte Darstellung der linken oberen Ecke des Wandelements von Figur 8;
- Figur 10:: eine Seitenansicht des Möbels von Figur 1, wobei mittig ein Wandelement eingesetzt ist;
- Figur 11:: eine Vorderansicht des Möbels;
- Figur 12:: einen Vertikalschnitt durch das Möbel längs der Linie XII-XII von Figur 11;
- Figur 13:: einen Vertikalschnitt des Möbels längs der Linie XIII-XIII von Figur 10;
- Figur 14:: die Einzelheit XIV von Figur 10 in vergrößerter Darstellung mit Blickrichtung von der Außenseite des Möbels her;
- Figur 15:: die Einzelheit XV von Figur 12 in vergrößerter Darstellung mit Blickrichtung von der Innenseite des Möbels her;
- Figur 16:: einen Horizontalschnitt eines Eckenbereichs des Möbels längs der Linie XVI-XVI von Figur 11, wobei ein hinterer Eckenbereich gezeigt und ein Anschlagabschnitt zu erkennen ist;
- Figur 17:: die Einzelheit XVII von Figur 13 in vergrößerter Darstellung, wobei ein Clipabschnitt zu erkennen ist;
- Figur 18:: den mittleren Abschnitt von Figur 10 in vergrößerter Darstellung, wobei ein komplettes Wandelement von außen zu erkennen ist.

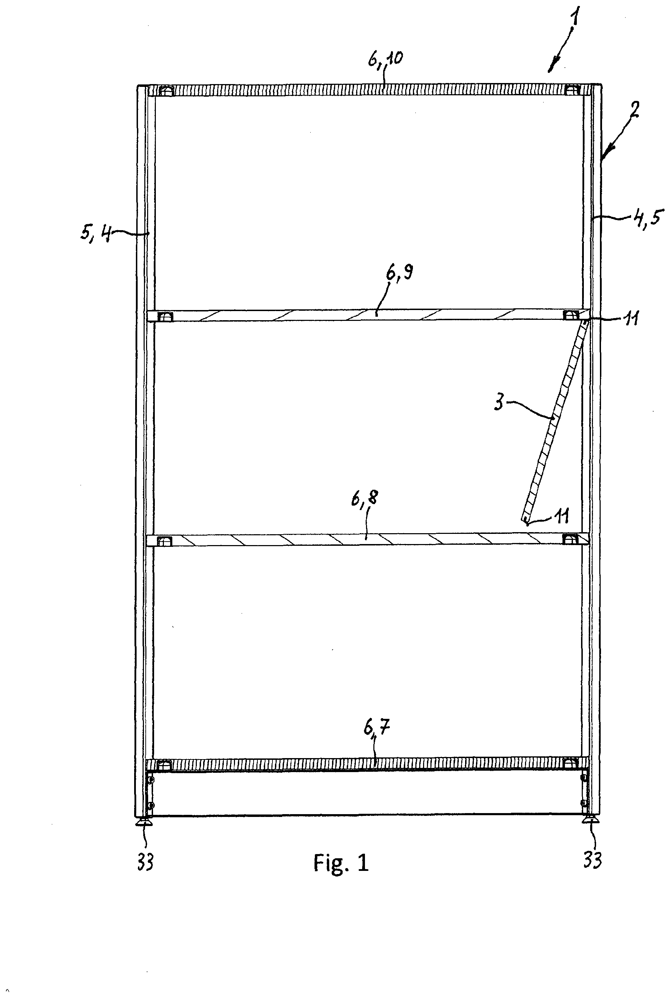

Die Figuren 1 und 10 bis 13 zeigen ein Möbel 1 in der Form eines Regals, das eine Möbelstruktur 2 sowie mindestens ein Wandelement 3 des Möbels 1 umfasst, das an der Möbelstruktur 2 befestigt werden kann.

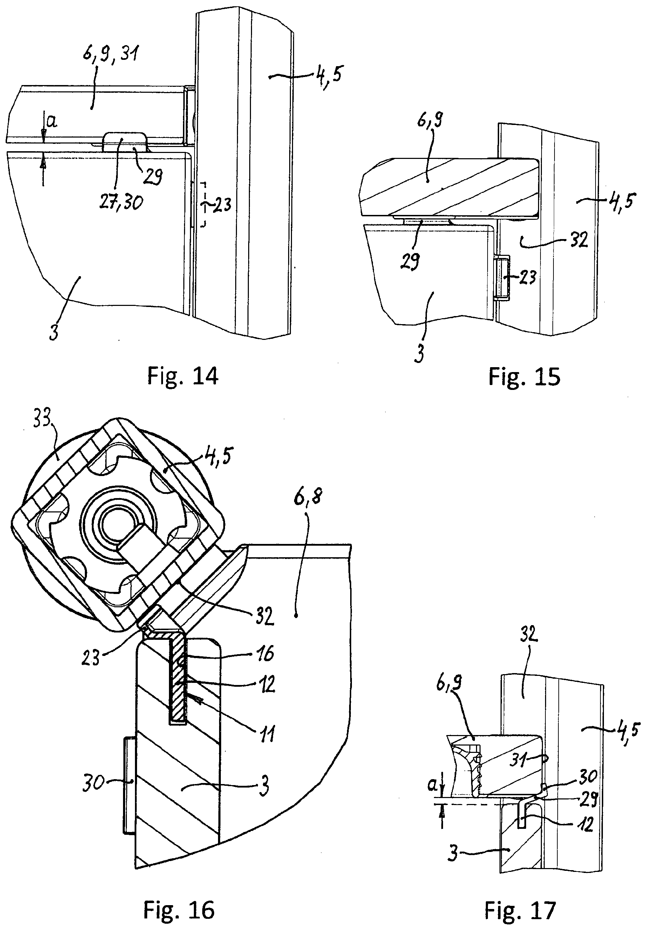

Die Möbelstruktur 2 umfasst im gezeigten Ausführungsbeispiel vier erste Strukturelemente 4 in der Form von vertikalen Stützelementen 5, die in den vier Eckenbereichen des Möbels 1 angeordnet sind. Die vertikalen Stützelemente 5 bestehen vorzugsweise aus hohlen, rohrförmigen Profilelementen, die einen im Querschnitt viereckigen, insbesondere quadratischen, Querschnitt haben, wie auch aus Figur 16 ersichtlich. Die vier vertikalen Stützelemente 5 sind, wie in Figur 16 anhand eines einzelnen Stützelements 5 dargestellt, relativ zum rechteckigen Grundriss des Möbels 1 um 45° gedreht angeordnet. Die Möbelstruktur 2 umfasst ferner vier zweite Strukturelemente 6 in der Form von horizontalen Brettern, nämlich ein bodenseitiges Brett 7, zwei mittlere, vertikal beabstandete Bretter 8, 9 und ein deckenseitiges Brett 10.

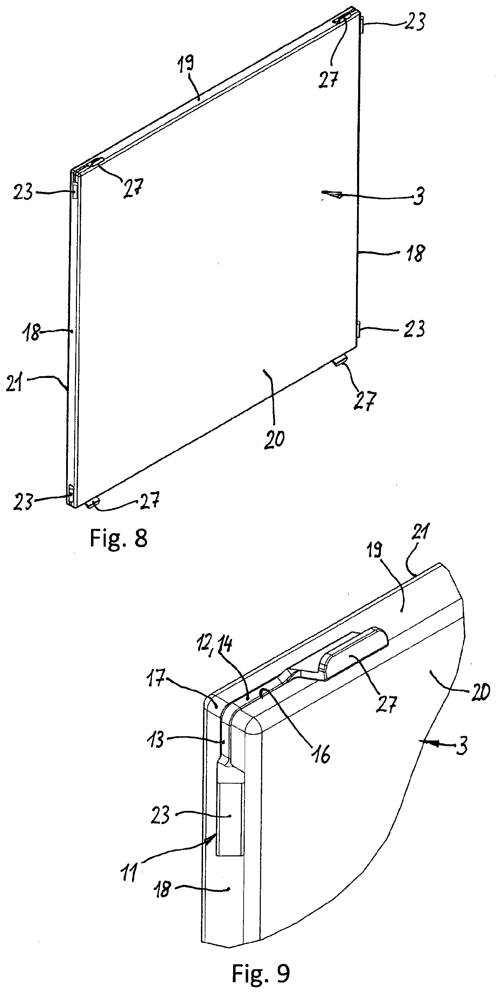

Beim Wandelement 3 kann es sich beispielsweise, wie aus Figur 1 ersichtlich, um ein vertikal an der Möbelstruktur 2 anzubringendes Seitenelement des Möbels 1 handeln, das im Bereich zwischen einem vorderen und einem hinteren vertikalen Stützelement 5 angeordnet ist. Die Befestigung des Wandelements 3 erfolgt dabei mittels vier Halteclips 11, die in den vier Eckenbereichen des Wandelements 3 am Wandelement 3 befestigt sind und sowohl mit einer Seitenfläche 32 von zwei vertikalen Stützelementen 5 (Figur 16) als auch mit einem Endbereich der beiden mittleren Brettern 8, 9 zusammenwirken, wie nachfolgend noch näher beschrieben wird. Die Befestigung erfolgt dabei, wie aus den Figuren 1 und 9 ersichtlich, derart, dass das Wandelement 3 mit einem speziellen Anschlagabschnitt 23 der Halteclips 11 an die vertikalen Stützelemente 5 angesetzt und mit einem Clipabschnitt 27 in die Möbelstruktur 2 eingeclipst werden, wobei der Clipabschnitt 27 an der Unterseite des Bretts 9 bzw. Oberseite des Bretts 8 anliegt und gleichzeitig die Stirnseiten der Bretter 8, 9 derart hintergreift, dass das Wandelement 3 gegen ein Herausfallen entgegen der Einsetzrichtung gesichert ist.

Vorzugsweise wird das Wandelement 3, wie dargestellt, von der Innenseite des Möbels 1 her in die Möbelstruktur 2 eingeclipst. Eine Befestigung des Wandelements 3 von der Außenseite des Möbels 1 her ist jedoch grundsätzlich auch möglich, wenn die Bretter 8, 9 weiter innen liegende Hintergreifmöglichkeiten für die Clipabschnitte 27 bieten.

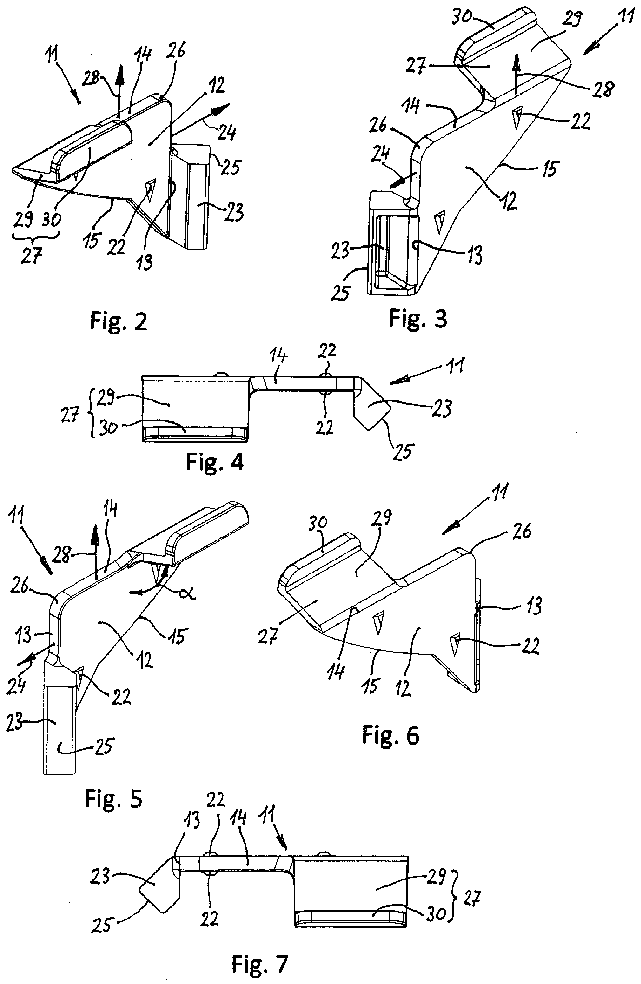

Im Folgenden wird anhand der Figuren 2 bis 9 der Halteclip 11 näher beschrieben. Die Figuren 2 bis 4 zeigen dabei eine erste Ausführungsform des Halteclips, der bei dem in Figur 8 dargestellten Wandelement 3 in der rechten oberen und linken unteren Ecke des Wandelements 3 eingesetzt wird. Die Figuren 5 bis 7 zeigen eine zweite Ausführungsform des Halteclips 11, die grundsätzlich gleich wie die erste Ausführungsform, jedoch zu dieser gespiegelt ausgebildet ist und bei dem in Figur 8 dargestellten Wandelement 3 in der linken oberen Ecke und rechten unteren Ecke eingesetzt wird.

Der Halteclip 11 umfasst einen Befestigungsabschnitt 12 zum Befestigen des Halteclips 11 in einem Eckenbereich des Wandelements 3. Der Befestigungsabschnitt 12 ist plattenartig ausgebildet und hat in der Seitenansicht annähernd die Form eines rechtwinkligen Dreiecks. Eine erste Kathete dieses Dreiecks wird durch einen ersten Randabschnitt 13 des Befestigungsabschnitts 12 gebildet, während eine zweite Kathete durch einen zweiten Randabschnitt 14 gebildet wird. Die Hypotenuse wird durch einen dritten Randabschnitt 15 gebildet, der im gezeigten Ausführungsbeispiel aus zwei gebogenen Teilabschnitten besteht, jedoch auch anders geformt, insbesondere geradlinig, sein kann. Alternativ sind auch anders geformte Befestigungsabschnitte 12, beispielsweise viereckige oder gerundete Befestigungsabschnitte, möglich.

Der Befestigungsabschnitt 12 wird, wie insbesondere aus den Figuren 8 und 9 ersichtlich, in einen Befestigungsschlitz 16 des Wandelements 13 eingesetzt. Der Befestigungsschlitz 16 erstreckt sich von einer Ecke 17 des Wandelements 3, die durch eine erste Stirnfläche 18 und eine zweite Stirnfläche 19 des Wandelements 3 gebildet wird, mittig zwischen den Seitenflächen 20, 21 des Wandelements 3 in das Wandelement 3 hinein. Die Breite des Befestigungsschlitzes 16 ist derart an die Dicke des Befestigungsabschnitts 12 angepasst, dass dieser ohne seitliches Spiel in den Befestigungsschlitz 16 eingeführt werden kann. Der Befestigungsabschnitt 12 wird hierbei vollständig im Befestigungsschlitz 16 aufgenommen, wobei der erste Randabschnitt 13 des Befestigungsabschnitts 12 vorzugsweise in der Ebene der ersten Stirnfläche 18 des Wandelements 3 liegt, während der zweite Randabschnitt 14 des Befestigungsabschnitts 12 vorzugsweise in der Ebene der zweiten Stirnfläche 19 des Wandelements 3 liegt. Die beiden Randabschnitte 13, 14 des Befestigungsabschnitts 12 bilden somit zueinander einen rechten Winkel.

Der Befestigungsabschnitt 12 weist weiterhin an beiden Seitenflächen Verankerungsnoppen 22 auf. Diese stehen über die Seitenflächen des Befestigungsabschnitts 12 vor und sind derart ausgebildet, dass sie sich beim Einsetzen des Befestigungsabschnitts 12 in den Befestigungsschlitz 16 in das Material des Wandelements 3 eindrücken können, so dass der Halteclip 11 im Befestigungsschlitz 16 festgeklemmt wird. Auf diese Weise können die Halteclips 11 ohne zusätzliche Mittel am Wandelement 3 arretiert werden. Alternativ oder zusätzlich ist es jedoch auch möglich, die Halteclips 11 im Wandelement 3 mittels eines zusätzlichen Klebers oder durch Verschweißen der Randabschnitte 13, 14 mit dem Wandelement 3 zu fixieren.

Der Halteclip 11 weist weiterhin einen Anschlagabschnitt 23 auf. Dieser Anschlagabschnitt 23 ist an den ersten Randabschnitt 13 des Befestigungsabschnitts 12 angeformt und steht in einer ersten Richtung 24, die in der Hauptebene des Befestigungsabschnitts 12 liegt, über den ersten Randabschnitt 13 vor. Der Anschlagabschnitt 23 weist eine Anschlagfläche 25 auf, die in einem Winkel von 45° zur Hauptebene des Befestigungsabschnitts 12 und damit zur Hauptebene des Wandelements 3 angeordnet ist und zum Anschlagen am vertikalen Stützelement 5 dient. Die Anschlagfläche 25 zeigt nach außen und hat die Form eines länglichen Rechtecks. Weiterhin steht der Anschlagabschnitt 23 auch quer über den Befestigungsabschnitt 12 vor. Hierdurch kann der Anschlagabschnitt 23 auch als Einsteckanschlag dienen, bis zu dem der Befestigungsabschnitt 12 in den Befestigungsschlitz 16 eingesteckt werden kann. Im eingesetzten Zustand liegt der Anschlagabschnitt 23, wie aus Figur 9 ersichtlich, vorzugsweise im Zwischenraum zwischen zwei Ebenen, in denen die Seitenflächen 20, 21 des Wandelements 3 liegen. Der Anschlagabschnitt 23 steht damit seitlich nicht über das Wandelement 3 vor.

Der Anschlagabschnitt 23 ist ferner zur Ecke 26 des Befestigungsabschnitts 12 und damit im montierten Zustand auch von der Ecke 17 des Wandelements 3 beabstandet. Kräfte, die auf den Anschlagabschnitt 23 einwirken, werden daher mit Abstand zur Ecke 17 des Wandelements 3 in dieses eingeleitet, was die Gefahr des Ausbrechens des Wandelements 3 im Eckenbereich zuverlässig verhindert. Im gezeigten Ausführungsbeispiel liegt dieser Abstand im Bereich zwischen 5 und 15 mm, jedoch kann dieser Abstand in großem Umfang variieren.

Der Halteclip 11 umfasst ferner einen elastischen Clipabschnitt 27. Dieser ist an den zweiten Randabschnitt 14 des Befestigungsabschnitts 12 angeformt und steht sowohl in einer zweiten Richtung 28, die in der Hauptebene des Befestigungsabschnitts 12 liegt und senkrecht zur ersten Richtung 24 ist, als auch quer über den Befestigungsabschnitt 12 in Richtung der Außenseite des Möbels 1 vor.

Der Clipabschnitt 27 ist im Querschnitt L-förmig. Der Clipabschnitt 27 umfasst einen Verbindungsschenkel 29 und einen sich vorzugsweise senkrecht von diesem weg erstreckenden Rückhalteschenkel 30, der das freie Ende des Clipabschnitts 27 bildet.

Der Clipabschnitt 27 ist wiederum mit Abstand zur Ecke 26 des Befestigungsabschnitts 12 angeordnet. Dieser Abstand kann in weitem Umfang variieren und beträgt im gezeigten Ausführungsbeispiel 10 bis 20 mm.

Der Winkel α (Figur 5) zwischen dem Verbindungsschenkel 29 des Clipabschnitts 27 und dem Befestigungsabschnitt 12 beträgt mehr als 90° und im gezeigten Ausführungsbeispiel etwa 110°. Hierdurch ist zumindest bei noch nicht montiertem Wandelement 3 zwischen dem Verbindungsschenkel 29 und der Stirnfläche 19 des Wandelements 3 ein Freiraum vorhanden, der es ermöglicht, dass der Clipabschnitt 27 beim Einsetzen des Wandelements 3 in die Möbelstruktur 2 so weit auf die Stirnfläche 19 des Wandelements 3 zurückgedrückt werden kann, dass der Rückhalteschenkel 30 des Halteclips 11 über den Randbereich des Bretts 8 bzw. 9 der Möbelstruktur 2 geschoben werden und anschließend so weit in die ursprüngliche Ausgangsposition zurückfedern kann, dass der Rückhalteschenkel 30 die Stirnfläche 31 des Bretts 8 bzw. 9 (Figur 17) übergreift.

Der Halteclip 11 besteht zweckmäßigerweise aus einem einteiligen Kunststoffteil. Der Verbindungsschenkel 29 des Clipabschnitts 27 ist plattenförmig und so dimensioniert, dass sein freies Ende und damit der Rückhalteschenkel 30 im Wesentlichen parallel zur Hauptebene des Befestigungsabschnitts 12, d.h. im gezeigten Ausführungsbeispiel in vertikaler Richtung, derart bewegt werden kann, dass er sich der Stirnfläche 19 des Wandelements 13 annähert.

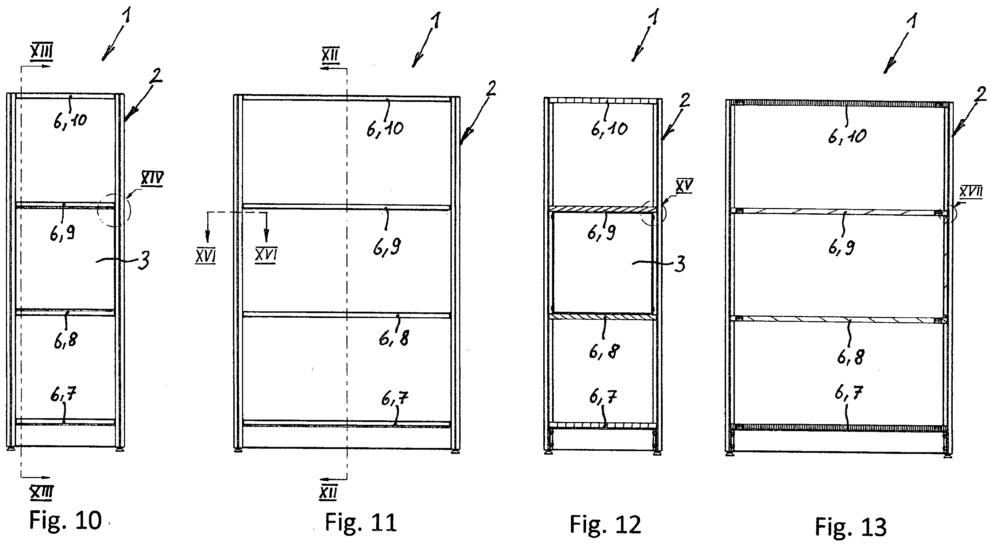

Figur 10 zeigt eine Seitenansicht des Möbels 1, Figur 11 eine Vorderansicht, Figur 12 einen Vertikalschnitt längs der Linie XII - XII von Figur 11 und Figur 13 einen Vertikalschnitt längs der Linie XIII - XIII von Figur 10.

Figur 14 zeigt die Einzelheit XIV von Figur 10 in vergrößertem Maßstab. Wie aus Figur 14 ersichtlich, übergreift der Rückhalteschenkel 30 des Halteclips 11 im eingesetzten Zustand des Wandelements 3 eine vorzugsweise vertikale Stirnfläche 31 des Bretts 9. Das Brett 9 bildet damit das zweite Strukturelement 6 im Sinne der vorliegenden Erfindung.

Figur 15 zeigt die Einzelheit XV von Figur 12 in vergrößertem Maßstab und zeigt damit einen Eckenbereich des Möbels 1 von innen. Wie aus den Figuren 15 und 16 ersichtlich, liegt der Anschlagabschnitt 13 mit seiner Anschlagfläche 25 an einer inneren diagonalen Seitenfläche 32 des vertikalen Stützelements 32 an. Der Anschlagabschnitt 23 verhindert damit, dass das Wandelement 3 über das vertikale Stützelement 5 hinaus nach außen gedrückt werden kann.

Figur 16, die einen Horizontalschnitt längs der Linie XVI - XVI von Figur 11 im Bereich des hinteren vertikalen Stützelements 5 zeigt, zeigt ferner einen Rückhalteschenkel 30. Dieser Rückhalteschenkel 30 ist jedoch nicht Teil des in Figur 16 geschnitten dargestellten Halteclips 11, der in einem oberen Eckenbereich des Wandelements 3 angeordnet ist, sondern Teil eines weiteren Halteclips 11, der gegenüberliegend im unteren Eckenbereich des Wandelements 3 angeordnet ist.

In Figur 16 ist weiterhin ein Standfuß 33 in der Draufsicht gezeigt. Dieser erstreckt sich von unten her in das vertikale Stützelement 5 hinein und ist in diesem befestigt.

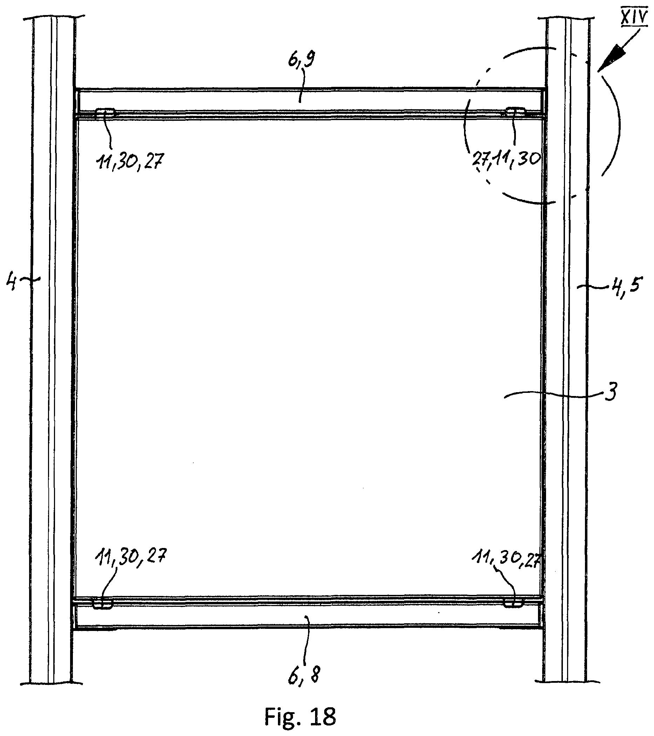

Figur 17 zeigt das Detail XVII von Figur 13 in vergrößerter Darstellung. Es ist ersichtlich, dass durch die zur Außenseite des Möbels 1 hin ansteigende Ausrichtung des Verbindungschenkels 29 des Clipabschnitts 27 das Randelement 3 in einem Abstand a zum oberen Brett 9 gehalten wird. Dieser Abstand a ist geringfügig größer als die Dicke des Verbindungsschenkels 29. Der Abstand a kann jedoch in vorteilhafter Weise maximal gleich groß oder sogar etwas geringer als die Höhe des Rückhalteschenkels 30 des Halteclips 11 sein, da, wie aus Figur 18 ersichtlich, am Wandelement 3 nicht nur im Bereich seiner beiden oberen Ecken, sondern auch im Bereich seiner beiden unteren Ecken gegenüberliegende Halteclips 11 befestigt sind, deren Clipabschnitte 27 sich vom unteren Rand des Wandelements 3 nach unten erstrecken und das darunter liegende Brett 8 stirnseitig übergreifen. Auch zwischen dem unteren Rand des Wandelements 3 und dem darunterliegenden Brett 8 ist damit ein Abstand a vorhanden. Bei der Montage kann das Wandelement 3 somit, wie in Figur 1 gezeigt, beispielsweise zunächst mit seinem oberen Rand zur Anlage an die beiden vertikalen Stützelemente 5 und dort in die verrastende, die Stirnfläche 31 des darüber liegenden Bretts 9 hintergreifende Endstellung gebracht werden, worauf das Wandelement 3 dann geringfügig hochgedrückt und auch im unteren Bereich nach außen in seine verrastende Endstellung geschwenkt werden kann.

Durch die gegenüberliegenden Clipabschnitte 27 wird das Wandelement 3 somit zwischen zwei zweiten Strukturelementen 6 in der Form von Brettern 8, 9 eingespannt und derart an diesen zweiten Strukturelementen 6 gehalten, dass es nicht nach innen gedrückt werden kann. Hierdurch erfolgt auch eine Selbstzentrierung des Wandelements 3 relativ zur Möbelstruktur 2 in vertikaler Richtung, wobei die oberen und unteren Clipabschnitte 27 eine Vorspannkraft in entgegengesetzten vertikalen Richtungen ausüben. Gleichzeitig liegt das Wandelement 3 mit Anschlagabschnitten 23, die über beide vertikale Ränder des Wandelements 3 in entgegengesetzte Richtungen vorstehen, an schräg verlaufenden Anschlagflächen 25 von zwei vertikalen Stützelementen 5 an, wobei diese Anschlagflächen zur Innenseite des Möbels 1 hin gerichtet sind. Der Abstand zwischen den Anschlagabschnitten 23 zweier gegenüberliegender Halteclips 11 ist dabei größer als der Minimalabstand zwischen den beiden vertikalen Stützelementen 5, so dass das Wandelement 3 von der gewünschten Endposition aus nicht mehr nach außen gedrückt werden kann. Durch die gegenüberliegenden Anschlagabschnitte 23 wird das Wandelement 3 in horizontaler Richtung in der Möbelstruktur 2, d.h. zwischen den vertikalen Stützelementen 5, zentriert.

Das Wandelement 3 ist dadurch in alle Richtungen sicher fixiert.

Im Rahmen der Erfindung sind eine Vielzahl von Varianten möglich. Beispielsweise ist es möglich, dass die zweiten Strukturelemente 6 keine Bretter 8, 9, sondern Querstreben sind, welche zwei vertikale Stützelemente 5 miteinander verbinden. Die Rückhalteschenkel 30 der Halteclips 11 müssen nicht Stirnflächen 19 von Brettern 8, 9 oder Querstreben übergreifen, sondern können auch in Nuten eingreifen, die in den Brettern 8, 9 oder Querstreben angeordnet sind. Die vertikalen Stützelemente 5 müssen nicht unbedingt in einem Winkel von 45° relativ zum Grundriss des Möbels 1 ausgerichtet sein, sondern können auch eine andere Ausrichtung haben. Beispielsweise ist das beschriebene Befestigungssystem auch bei Möbeln 1 verwendbar, die deren Stützelemente 5 relativ zum Grundriss des Möbels 1 nicht verdreht angeordnet sind. Weiterhin ist es möglich, die Position des Anschlagabschnitts 23 und Clipabschnitts 27 zu vertauschen, wobei dann die Clipabschnitte 27 die vertikalen Stützelemente 5 übergreifen, während die Anschlagabschnitte 23 an geeigneten Flächen oder Konsolen der zweiten Strukturelemente 6 anschlagen.

## Patentansprüche

1. Möbel mit mindestens einem Halteclip (11) zum Befestigen eines Wandelements (3) eines Möbels (1) an einer Möbelstruktur (2), wobei der Halteclip (11) Folgendes umfasst:
- einen Befestigungsabschnitt (12) zum Befestigen des Halteclips (11) am Wandelement (3), wobei der Befestigungsabschnitt (12) einen ersten Randabschnitt (13) und einen zweiten Randabschnitt (14) aufweist,
- einen Anschlagabschnitt (23), der sich vom ersten Randabschnitt (13) des Befestigungsabschnitts (12) in einer ersten Richtung (24) weg erstreckt und ausgebildet ist, an einem ersten Strukturelement (4) der Möbelstruktur (2) anzuschlagen,
- einen elastischen Clipabschnitt (27), der sich vom zweiten Randabschnitt (14) des Befestigungsabschnitts (12) in einer zweiten Richtung (28), die zur ersten Richtung (24) unterschiedlich ist, weg erstreckt und zwischen einer das Einsetzen des Wandelements (3) in die Möbelstruktur (2) ermöglichenden Einsetzposition und einer ein zweites Strukturelement (6) der Möbelstruktur (2) hintergreifenden Rückhalteposition elastisch bewegbar ist, und wobei
das Wandelement (3) plattenförmig ausgebildet ist und Folgendes umfasst:
- Seitenflächen (20, 21)
- erste und zweite Stirnflächen (18, 19), die eine Ecke (17) bilden, und
- einen Befestigungsschlitz (16) zum Einsetzen des Befestigungsabschnitts (12) des Halteclips (11), wobei sich der Befestigungsschlitz (16 von der Ecke (17) des Wandelements (3) zwischen den Seitenflächen (20, 21) in das Wandelement (3) hinein erstreckt.

2. Möbel nach Anspruch 1, **dadurch gekennzeichnet, dass** der Befestigungsabschnitt (12) plattenförmig ausgebildet ist und der erste und zweite Randabschnitt (13, 14) zueinander in einem Winkel von 90° verlaufen, wobei der Anschlagabschnitt (23) und der Clipabschnitt (27) über die Randabschnitte (13, 14) hinaus in Richtungen (24, 28) überstehen, die zueinander orthogonal sind.

3. Möbel nach einem der vorhergehenden Ansprüche, **dadurch gekennzeichnet, dass** der Befestigungsabschnitt (12) an zumindest einer seiner Seitenflächen vorstehende Verankerungsnoppen (22) aufweist, die zum Verankern des Halteclips (11) im Wandelement (3) ausgebildet sind.

4. Möbel nach einem der vorhergehenden Ansprüche, **dadurch gekennzeichnet, dass** der Befestigungsabschnitt (12) eine Hauptebene aufweist und der Anschlagabschnitt (23) eine zum Anschlagen an das erste Strukturelement (4) der Möbelstruktur (2) ausgebildete Anschlagfläche (25) aufweist, die in einem Winkel von 45° zur Hauptebene des Befestigungsabschnitts (12) angeordnet ist.

5. Möbel nach einem der vorhergehenden Ansprüche, **dadurch gekennzeichnet, dass** der Anschlagabschnitt (23) und Clipabschnitt (27) von einer von den Randabschnitten (13, 14) gebildeten Ecke (26) des Befestigungsabschnitts (12) 2 bis 50 mm beabstandet sind.

6. Möbel nach einem der vorhergehenden Ansprüche, **dadurch gekennzeichnet, dass** der Clipabschnitt (27) im Querschnitt L-förmig ist und einen Verbindungsschenkel (29), der an den Befestigungsabschnitt (12) angeformt ist und sich quer von diesem weg erstreckt, und einen Rückhalteschenkel (30) aufweist, der an den Verbindungsschenkel (29) angeformt und zur Anlage am zweiten Strukturelement (6) der Möbelstruktur (2) ausgebildet ist.

7. Möbel nach Anspruch 6, **dadurch gekennzeichnet, dass** sich der Verbindungsschenkel (29) in einem Winkel (α) größer 90° bis 160° zum Befestigungsabschnitt (12) erstreckt.

8. Möbel nach einem der vorhergehenden Ansprüche, **dadurch gekennzeichnet, dass** der Anschlagabschnitt (23) und Clipabschnitt (27) Einsteckanschläge zur Begrenzung des Einsteckwegs des Befestigungsabschnitts (12) in das Wandelement (3) bilden.

9. Möbel nach einem der vorhergehenden Ansprüche, **dadurch gekennzeichnet, dass** die ersten und zweiten Randabschnitte (13, 14) des Befestigungsabschnitts (12) des in den Befestigungsschlitz (16) eingesetzten Halteclips (11) parallel zur ersten und zweiten Stirnfläche (18, 19) des Wandelements (3) verlaufen.

10. Möbel nach einem der vorhergehenden Ansprüche, **dadurch gekennzeichnet, dass** der Anschlagabschnitt (23) des eingesetzten Halteclips (11) im Zwischenraum von zwei Ebenen liegt, in denen die Seitenflächen (20, 21) des Wandelements (3) liegen.

11. Möbel nach einem der vorhergehenden Ansprüche, **dadurch gekennzeichnet, dass** das erste Strukturelement (4), mit dem der Anschlagabschnitt (23) des Halteclips (11) zusammenwirkt, ein vertikales Stützelement (5) des Möbels (1) ist, während das zweite Strukturelement (6), mit dem der Clipabschnitt (27) des Halteclips (11) zusammenwirkt, ein Brett (8, 9) oder eine horizontale Strebe des Möbels (1) ist.

12. Möbel nach einem der vorhergehenden Ansprüche, **dadurch gekennzeichnet, dass** das erste Strukturelement (4) ein vertikales Stützelement (5) eines Regals und das zweite Strukturelement (6) ein Regalbrett oder eine horizontale Querstrebe eines Regals ist.

13. Möbel nach einem der vorhergehenden Ansprüche, **dadurch gekennzeichnet, dass** das Möbel (1) mindestens zwei vertikale Stützelemente (5) mit rechteckigem Querschnitt und mindestens ein von den Stützelementen (5) getragenes Brett (8, 9) mit rechteckiger Kontur aufweist, wobei der rechteckige Querschnitt der Stützelemente (5) relativ zur rechteckigen Kontur des Bretts (8, 9) um 45° gedreht angeordnet ist.

## Claims

1. An item of furniture having at least one retaining clip (11) for securing a wall element (3) of an item of furniture (1) to a furniture structure (2), the retaining clip (11) comprising the following:
- a securing section (12) for securing the retaining clip (11) to the wall element (3), the securing section (12) having a first edge section (13) and a second edge section (14),
- a stop section (23) which extends away from the first edge section (13) of the securing section (12) in a first direction (24) and is designed to abut a first structural element (4) of the furniture structure (2),
- a resilient clip section (27) which extends away from the second edge section (14) of the securing section (12) in a second direction (28) different from the first direction (24) and is resiliently movable between an insertion position permitting the insertion of the wall element (3) into the furniture structure (2) and a retaining position engaging behind a second structural element (6) of the furniture structure (2), and wherein
the wall element (3) is planar and comprises:
- lateral surfaces (20, 21),
- first and second end faces (18, 19) forming a corner (17), and
- a securing slot (16) for inserting the securing section (12) of the retaining clip (11), the securing slot (16) extending from the corner (17) of the wall element (3) between the lateral surfaces (20, 21) into the wall element (3).

2. The item of furniture according to claim 1, **characterised in that** the securing section (12) is planar and the first and second edge sections (13, 14) extend at an angle of 90° to one another, the stop section (23) and the clip section (27) projecting beyond the edge sections (13, 14) in directions (24, 28) orthogonal to each other.

3. The item of furniture according to any of the preceding claims, **characterised in that** the securing section (12) has anchoring knobs (22) projecting on at least one of its lateral surfaces, which knobs are designed to anchor the retaining clip (11) in the wall element (3).

4. The item of furniture according to any of the preceding claims, **characterised in that** the securing section (12) has a main plane and the stop section (23) has a stop surface (25) which is designed to abut the first structural element (4) of the furniture structure (2), which surface is arranged at an angle of 45° to the main plane of the securing section (12).

5. The item of furniture according to any of the preceding claims, **characterised in that** the stop section (23) and clip section (27) are spaced 2 to 50 mm from a corner (26) of the securing section (12) formed by the edge sections (13, 14).

6. The item of furniture according to any of the preceding claims, **characterised in that** the clip section (27) is L-shaped in cross section and has a connecting leg (29) that is integrally formed on the securing section (12) and extends transversely therefrom, and a retaining leg (30) which is integrally formed on the connecting leg (29) and is designed to rest against the second structural element (6) of the furniture structure (2).

7. The item of furniture according to claim 6, **characterised in that** the connecting leg (29) extends at an angle (α) of greater than 90° and up to 160° relative to the securing section (12).

8. The item of furniture according to any of the preceding claims, **characterised in that** the stop section (23) and clip section (27) form insertion stops for limiting the insertion path of the securing section (12) into the wall element (3).

9. The item of furniture according to any of the preceding claims, **characterised in that** the first and second edge sections (13, 14) of the securing section (12) of the retaining clip (11) inserted into the securing slot (16) extend parallel to the first and second end faces (18, 19) of the wall element (3).

10. The item of furniture according to any of the preceding claims, **characterised in that** the stop section (23) of the inserted retaining clip (11) is situated in the gap between two planes in which the lateral surfaces (20, 21) of the wall element (3) lie.

11. The item of furniture according to any of the preceding claims, **characterised in that** the first structural element (4) with which the stop section (23) of the retaining clip (11) interacts is a vertical support element (5) of the item of furniture (1), while the second structural element (6) with which the clip section (27) of the retaining clip (11) interacts is a board (8, 9) or a horizontal strut of the item of furniture (1).

12. The item of furniture according to any of the preceding claims, **characterised in that** the first structural element (4) is a vertical support element (5) of a shelf unit and the second structural element (6) is a shelf board or a horizontal cross strut of a shelf unit.

13. The item of furniture according to any of the preceding claims, **characterised in that** the item of furniture (1) has at least two vertical support elements (5) having a rectangular cross section and at least one board (8, 9) having a rectangular contour, which board is supported by the support elements (5), the rectangular cross section of the support elements (5) being arranged rotated 45° relative to the rectangular contour of the board (8, 9).

## Revendications

1. Meuble comportant au moins une accroche (11) pour fixer un pan (3) de meuble (1) à une structure de meuble (2), l'accroche (11) comprenant :
- une partie de fixation (12) pour fixer l'accroche (11) au pan de meuble (3), la partie de fixation (12) comportant une première partie de bord (13) et une deuxième partie de bord (14),
- une partie de butée (23) qui s'étend à partir de la première partie de bord (13) de la partie de fixation (12) dans une première direction (24) et qui est conçue pour venir en butée contre un premier élément structurel (4) de la structure de meuble (2),
- une partie d'accroche (27) élastique qui s'étend à partir de la deuxième partie de bord (14) de la partie de fixation (12) dans une deuxième direction (28) différente de la première direction (24), et qui est élastiquement mobile entre une position d'insertion permettant l'insertion du pan de meuble (3) dans la structure de meuble (2) et une position de retenue dans laquelle elle est en prise par l'arrière avec un deuxième élément structurel (6) de la structure de meuble (2) ;
le pan de meuble (3) étant en forme de plaque et comprenant :
- des faces (20, 21),
- des premiers et deuxièmes côtés (18, 19) formant un angle (17), et
- une fente de fixation (16) destinée à l'insertion de la partie de fixation (12) de l'accroche (11), ladite fente de fixation (16) s'étendant entre les faces (20, 21) en pénétrant dans le pan de meuble (3) à partir de l'angle (17) du pan de meuble (3).

2. Meuble selon la revendication 1, **caractérisé en ce que** la partie de fixation (12) est en forme de plaque et les première et deuxième parties de bord (13, 14) s'étendent à un angle de 90° l'une par rapport à l'autre, la partie de butée (23) et la partie d'accroche (27) dépassant des parties de bord (13, 14) dans des directions (24, 28) orthogonales l'une à l'autre.

3. Meuble selon l'une des revendications précédentes, **caractérisé en ce que** la partie de fixation (12) présente, sur au moins une de ses faces, des protubérances d'ancrage (22) qui sont conçues pour ancrer l'accroche (11) dans le pan de meuble (3).

4. Meuble selon l'une des revendications précédentes, **caractérisé en ce que** la partie de fixation (12) présente un plan principal et la partie de butée (23) présente une surface de butée (25) conçue pour venir en butée contre le premier élément structurel (4) de la structure du meuble (2) et disposée à un angle de 45° par rapport au plan principal de la partie de fixation (12).

5. Meuble selon l'une des revendications précédentes, **caractérisé en ce que** la partie de butée (23) et la partie d'accroche (27) sont espacées de 2 à 50 mm d'un angle (26) de la partie de fixation (12) formé par les parties de bord (13, 14).

6. Meuble selon l'une des revendications précédentes, **caractérisé en ce que** la partie d'accroche (27) présente une section transversale en forme de L et comporte une portion de liaison (29) formée sur la partie de fixation (12) et s'étendant transversalement à partir de celle-ci, ainsi qu'une portion de retenue (30) formée sur la portion de liaison (29) et conçue pour s'appuyer contre le deuxième élément structurel (6) de la structure du meuble (2).

7. Meuble selon la revendication 6, **caractérisé en ce que** la portion de liaison (29) s'étend selon un angle (α) supérieur à 90° jusqu'à 160° par rapport à la partie de fixation (12).

8. Meuble selon l'une des revendications précédentes, **caractérisé en ce que** la partie de butée (23) et la partie d'accroche (27) forment des butées encastrées pour limiter la course d'encastrement de la partie de fixation (12) dans le pan de meuble (3).

9. Meuble selon l'une des revendications précédentes, **caractérisé en ce que** les première et deuxième parties de bord (13, 14) de la partie de fixation (12) de l'accroche (11) insérée dans la fente de fixation (16) s'étendent parallèlement aux premiers et deuxièmes côtés (18, 19) du pan de meuble (3).

10. Meuble selon l'une des revendications précédentes, **caractérisé en ce que** la partie de butée (23) de l'accroche (11) insérée se trouve dans l'espace formé entre deux plans dans lesquels se trouvent les faces (20, 21) du pan de meuble (3).

11. Meuble selon l'une des revendications précédentes, **caractérisé en ce que** le premier élément structurel (4) avec lequel coopère la partie de butée (23) de l'accroche est un élément de support vertical (5) du meuble (1), tandis que le deuxième élément structurel (6) avec lequel coopère la partie d'accroche (27) de l'accroche (11) est une tablette (8, 9) ou un étai horizontal du meuble (1).

12. Meuble selon l'une des revendications précédentes, **caractérisé en ce que** le premier élément structurel (4) est un élément de support vertical (5) d'une étagère et le deuxième élément structurel (6) est une tablette d'étagère ou une traverse horizontale d'une étagère.

13. Meuble selon l'une des revendications précédentes, **caractérisé en ce que** le meuble (1) comporte au moins deux éléments de support verticaux (5) de section transversale rectangulaire et au moins une tablette (8, 9) de contour rectangulaire portée par les éléments de support (5), la section transversale rectangulaire des éléments de support (5) étant disposée en étant pivotée de 45° par rapport au contour rectangulaire de la tablette (8, 9).
